# EUROPEAN PATENT APPLICATION

(11) **EP 3 879 119 A1**
(43) Date of publication of application: **15.09.2021**
(21) Application number: 21153033.2
(22) Date of filing: 22.01.2021
(51) Int. Cl.: F04D 27/00, F04D 27/02

(54) **SURGING PRECURSOR DETECTING DEVICE, METHOD OF DETECTING SURGING PRECURSOR, AND PROGRAM**

(30) Priority: 13.03.2020 JP 2020043944
(71) Applicant: Mitsubishi Heavy Industries, Ltd., Chiyoda-ku, Tokyo 1008332 (JP)
(72) Inventor: IWAKIRI, Kenichiro, Tokyo, 1008332 (JP); IBARAKI, Seiichi, Tokyo, 1008332 (JP)
(74) Representative: Studio Torta S.p.A.

(57) **Abstract**

A surging precursor detecting device configured to detect a precursor of a surge, based on an analysis result of a chaotic time series analysis, is provided.

Solving Means

A surging precursor detecting device is a surge detecting device configured to detect a precursor of a surge of a compressor including a housing portion housing a blade including a rotary blade of an impeller and configured to compress a fluid supplied from an inlet piping portion and discharge the fluid to an outlet piping portion. The surging precursor detecting device includes an acquisition unit configured to acquire time series data of a state quantity having a correlation with internal pressure in at least one position of an inlet piping position in the inlet piping portion, an outlet piping position in the outlet piping portion, and an intermediate position between the inlet piping position and the outlet piping position, an analysis unit configured to perform a chaotic time series analysis on the time series data with the number of embedded dimensions being not less than three, and a detecting unit configured to detect a precursor of the surge, based on an analysis value obtained by the chaotic time series analysis.

## Description

### TECHNICAL FIELD

The present disclosure relates to precursor detection of a surge (surging) of a compressor such as an axial flow compressor and a centrifugal compressor.

### BACKGROUND ART

In a compressor such as an axial flow compressor and a centrifugal compressor used in various applications, when pressure is increased in a state with a reduced flow rate during operation, a stall or a surge occurs. A stall in the axial flow compressor is so-called a revolution stall, and is a phenomenon in which a stall region occurring in a part in a rotational direction of a blade lattice of a rotor blade and a stator vane constituting the compressor propagates and turns in the rotational direction within the blade lattice. Further, a surge is a phenomenon in which a stall occurs in the entire blade lattice in the rotational direction all at once, and pressure suddenly decreases. Particularly, when a surge occurs, a great fluctuation in flow velocity and pressure due to backflow and pulsation occurs in the entire pipe line system connected to the compressor, and a great load is applied to equipment including the pipe line system. A condition in which such a surge occurs can be measured or estimated by a test, an analysis, and the like in advance, and thus a safety factor is taken from a boundary (surge line) of a region in which the surge occurs for operation of the compressor, and the compressor is operated on a lower pressure side.

However, since a region in which the efficiency of the compressor is maximum is located in the vicinity of the surge line, it is preferable to operate the compressor in an operation condition of a region as close to the surge line as possible. However, a surge line in an actual compressor may be on a pressure side lower than that of a surge line obtained in a test and an analysis at an early stage as operation time increases due to dirt, erosion, and the like in the compressor caused by a change over time of the compressor. Further, a confirmation test of a surge line in the actual compressor may not be performed. Therefore, a great safety factor described above needs to be taken, and it is difficult to operate the compressor under a condition that high efficiency is exhibited.

Thus, it is conceivable that a stall and an occurrence of a surge are detected during operation of the compressor, and an operation condition is controlled accordingly. As such a technique, there is a technique for detecting an occurrence of a surge by detecting a pressure change, a temperature rise, an occurrence of a strange sound, and the like of a compressor. However, such a technique detects an occurrence of a surge and then controls an operation of a compressor, and thus some sort of damage to the compressor may be caused.

Thus, a technique for detecting a precursor of an occurrence of a surge has been conventionally proposed (Patent Literatures 1 and 2). For example, in Patent Literature 2, a precursor of an occurrence of a surge is detected based on a waveform signal (time series data) representing a time series change in parameter value indicating a fluid flow state of fluid in a compressed flow path of a compressor, such as a detection value of a pressure sensor installed in a casing (housing portion) of the compressor.

Note that Non Patent Literatures 1 and 2 relate to a chaotic time series analysis.

### CITATION LIST

### PATENT LITERATURE

Patent Literature 1: JP 4030490 B
Patent Literature 2: JP 2014-66209 A

### NON PATENT LITERATURE

Non Patent Literature 1: Taiji YAMADA, "Method of Analyzing Chaos", 1998, Japan Society for Fuzzy Theory and Intelligent Informatics Journal Vol. 10, No. 4, pp. 827 to 835, [search on January 24, 2020], the Internet <https://www.jstage.jst.go.jp/article/jfuzzy/10/5/10_KJ00002086753/_pdf>
Non Patent Literature 2: Kazuyuki AIHARA, "Basic and Application of Chaotic Time Series Analysis", Sangyo Tosho Publishing Co., Ltd., ISBN4-7828-1010-5, November 2000

### SUMMARY OF INVENTION

### TECHNICAL PROBLEM

A surge of a compressor is an unstable fluid flow phenomenon caused by a decrease in flow rate of the compressor, and relates to not only the compressor alone but also the entire pipe line system including an inlet pipe and an outlet pipe of the compressor. Thus, the inventors of the present invention have considered to detect a precursor of a surge by evaluating instability of the entire pipe line system. Specifically, the inventors of the present invention have found out that, when a state quantity having a correlation with internal pressure such as, for example, a pressure value in a pipe line system is measured, and a chaotic characteristic of an attractor is evaluated by performing a chaotic time series analysis on a time series of the state quantity, an analysis value of the chaotic characteristic changes before an occurrence of a surge.

At least an embodiment of the present invention has been made in view of the above-described circumstance, and an object thereof is to provide a surging precursor detecting device that detects a precursor of a surge, based on an analysis result of a chaotic time series analysis.

### SOLUTION TO PROBLEM

A surging precursor detecting device according to at least an embodiment of the present invention is a surging precursor detecting device configured to detect a precursor of a surge of a compressor including a housing portion housing a blade including a rotary blade of an impeller and configured to compress a fluid supplied from an inlet piping portion and discharge the fluid to an outlet piping portion, and the surging precursor detecting device includes:
an acquisition unit configured to acquire time series data of a state quantity having a correlation with internal pressure in at least one position of an inlet piping position in the inlet piping portion, an outlet piping position in the outlet piping portion, and an intermediate position between the inlet piping position and the outlet piping position;
an analysis unit configured to perform a chaotic time series analysis on the time series data with the number of embedded dimensions being not less than three; and
a detecting unit configured to detect a precursor of the surge, based on an analysis value obtained by the chaotic time series analysis.

A surging precursor detecting method according to at least an embodiment of the present invention is a surging precursor detecting method of detecting a precursor of a surge of a compressor including a housing portion housing a blade including a rotary blade of an impeller and configured to compress a fluid supplied from an inlet piping portion and discharge the fluid to an outlet piping portion, and the surging precursor detecting method includes the steps of:
acquiring time series data of a state quantity having a correlation with internal pressure in at least one position of an inlet piping position in the inlet piping portion, an outlet piping position in the outlet piping portion, and an intermediate position between the inlet piping position and the outlet piping position;
performing a chaotic time series analysis on the time series data with the number of embedded dimensions being not less than three; and
detecting a precursor of the surge, based on an analysis value obtained by the chaotic time series analysis.

A program according to at least an embodiment of the present invention is a program for detecting a precursor of a surge of a compressor including a housing portion housing a blade including a rotary blade of an impeller and configured to compress a fluid supplied from an inlet piping portion and discharge the fluid to an outlet piping portion, and the program causes a computer to achieve:
an acquisition unit configured to acquire time series data of a state quantity having a correlation with internal pressure in at least one position of an inlet piping position in the inlet piping portion, an outlet piping position in the outlet piping portion, and an intermediate position between the inlet piping position and the outlet piping position;
an analysis unit configured to perform a chaotic time series analysis on the time series data with the number of embedded dimensions being not less than three; and
a detecting unit configured to detect a precursor of the surge, based on an analysis value obtained by the chaotic time series analysis.

### ADVANTAGEOUS EFFECTS OF INVENTION

According to at least an embodiment of the present invention, a surging precursor detecting device that detects a precursor of a surge, based on an analysis result of a chaotic time series analysis, is provided.

### BRIEF DESCRIPTION OF DRAWINGS

FIG. 1 is a diagram schematically illustrating a configuration of a surging precursor detecting device 1 according to an embodiment of the present invention.
FIG. 2 is a diagram illustrating an installation position of a sensor according to the embodiment of the present invention, where a compressor is a centrifugal compressor.
FIG. 3 is a diagram illustrating an installation position of a sensor according to the embodiment of the present invention, where a compressor is an axial flow compressor.
FIG. 4 is a diagram illustrating an installation position of a sensor according to another embodiment of the present invention, where a compressor is an axial flow compressor.
FIG. 5A is a diagram showing a relationship between an analysis value obtained from time series data of a pressure value in an inlet piping position, and a flow volume ratio according to the embodiment of the present invention, where the analysis value is a maximum Lyapunov exponent.
FIG. 5B is a diagram showing a relationship between an analysis value obtained from time series data of a pressure value in the inlet piping position, and a flow volume ratio according to the embodiment of the present invention, where the analysis value is a translation error amount.
FIG. 6A is a diagram showing a relationship between an analysis value obtained from time series data of a pressure value in an intermediate position (near a blade), and a flow volume ratio according to the embodiment of the present invention, where the analysis value is a maximum Lyapunov exponent.
FIG. 6B is a diagram showing a relationship between an analysis value obtained from time series data of a pressure value in the intermediate position (near a blade), and a flow volume ratio according to the embodiment of the present invention, where the analysis value is a translation error amount.
FIG. 7A is a diagram showing a relationship between an analysis value obtained from time series data of a pressure value in an outlet piping position, and a flow volume ratio according to the embodiment of the present invention, where the analysis value is a maximum Lyapunov exponent.
FIG. 7B is a diagram showing a relationship between an analysis value obtained from time series data of a pressure value in the outlet piping position, and a flow volume ratio according to the embodiment of the present invention, where the analysis value is a translation error amount.
FIG. 8A is a diagram showing a trend of a change in analysis value indicating a precursor of a surge according to the embodiment of the present invention according to an installation position of a sensor, where the analysis value is a maximum Lyapunov exponent or KS entropy.
FIG. 8B is a diagram showing a trend of a change in analysis value indicating a precursor of a surge according to the embodiment of the present invention according to an installation position of a sensor, where the analysis value is a translation error amount.
FIG. 9 is a diagram illustrating a method of detecting a surging precursor according to the embodiment of the present invention.

### DESCRIPTION OF EMBODIMENTS

An embodiment of the present invention will be described hereinafter with reference to the appended drawings. It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state in which the arrangement is relatively displaced by a tolerance, or by an angle or a distance whereby it is possible to achieve the same function.

For instance, an expression of an equal state such as "same", "equal" and "uniform" shall not be construed as indicating only the state in which the feature is strictly equal, but also includes a state in which there is a tolerance or a difference that can still achieve the same function. Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

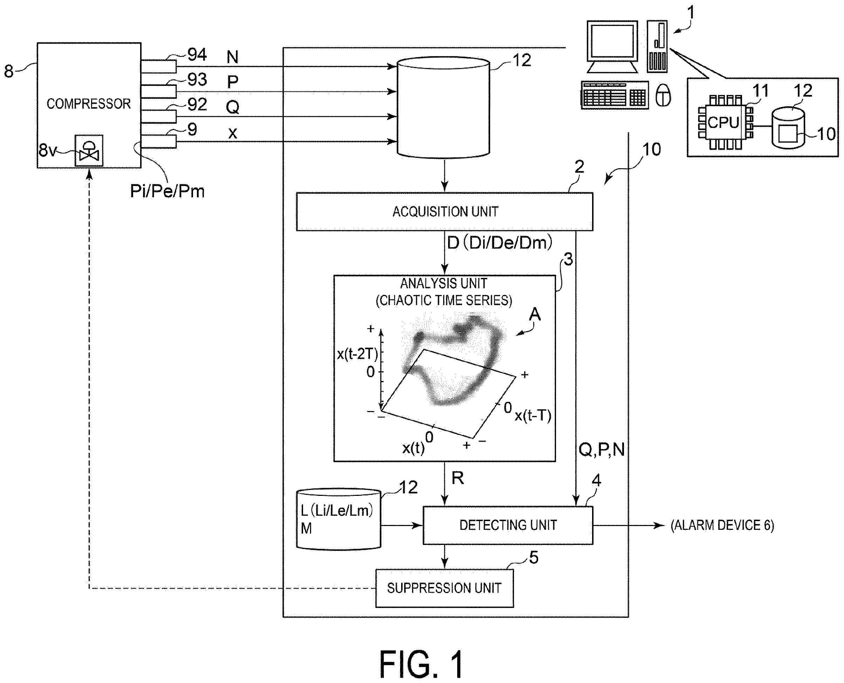

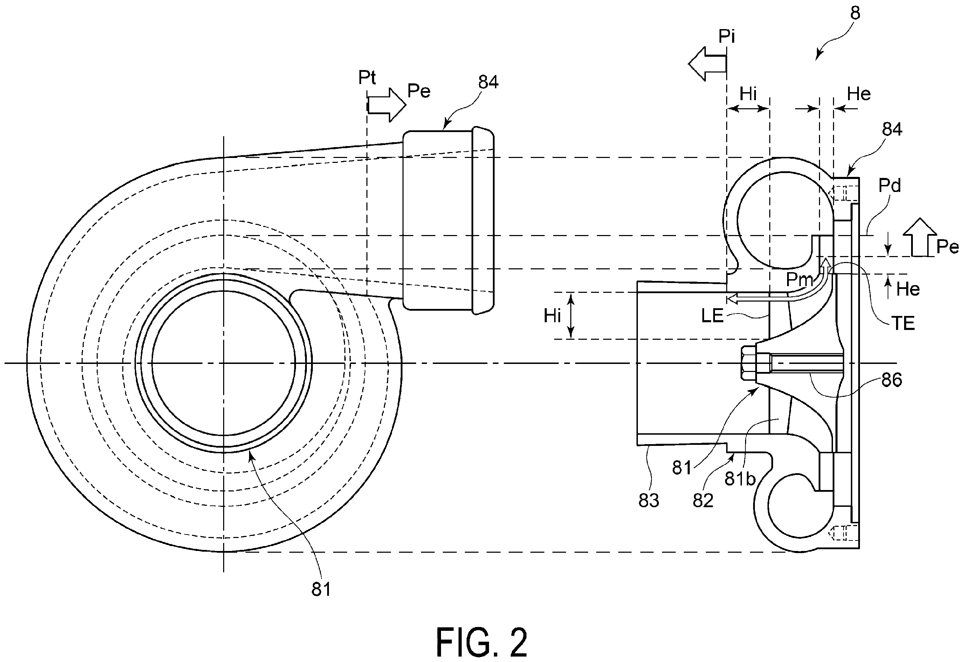

FIG. 1 is a diagram schematically illustrating a configuration of a surging precursor detecting device 1 according to an embodiment of the present invention. FIGS. 2 to 4 are diagrams illustrating an installation position of a sensor 9 according to the embodiment of the present invention.

The surging precursor detecting device 1 illustrated in FIG. 1 is a device for detecting a precursor of a surge (surging, the same hereinafter) of a compressor 8 that is, for example, a centrifugal compressor, an axial flow compressor, or the like.

### Description of Compressor 8

In describing the compressor 8 described above, as illustrated in FIGS. 2 to 4, the compressor 8 includes an impeller 81 and a housing portion 82 that houses a blade 81b including a rotary blade of the impeller 81, and the impeller 81 is rotatably configured inside the housing portion 82. For example, the impeller 81 may be configured to be rotated as a turbine coupled to a second end portion side of a rotor shaft 86 is rotated by exhaust gas or the like, or may be configured to be rotated by an electric motor. Two pipes are connected to the housing portion 82, and the housing portion 82 is configured to compress a fluid, such as air, for example, supplied from the pipe on the inlet side by the above-described rotating impeller 81, and discharge the fluid to the pipe on the outlet side.

### Description of Installation Position of Sensor 9

Further, the sensor 9 for detecting a state quantity in a pipe line system (internal flow path) formed by the above-described compressor 8 and the above-described two pipes is installed in at least one of the compressor 8 and the two pipes. The state quantity is a physical quantity having a correlation with internal pressure of the compressor 8, and is, for example, pressure, noise, vibration, and the like. Specifically, as illustrated in FIGS. 2 to 4, the sensor 9 is installed in any position in the vicinity of a leading edge LE or a trailing edge TE of the blade 81b located inside the above-described housing portion 82, or in any position located upstream or downstream of the leading edge LE and the trailing edge TE.

Here, a portion in the pipe line system that forms a flow path located upstream of the above-described housing portion 82 is referred to as an inlet piping portion 83, and a portion in the pipe line system that forms a flow path located downstream of the housing portion 82 is referred to as an outlet piping portion 84. Further, a position that is an installation position of the sensor 9 and is any position located upstream of the vicinity of the leading edge LE of the blade 81b located on the furthest upstream side of the compressor 8 is referred to as an inlet piping position Pi. Similarly, a position that is an installation position of the sensor 9 and is any position located downstream of the vicinity of the trailing edge TE of the blade 81b located on the furthest downstream side of the compressor 8 is referred to as an outlet piping position Pe. Further, a position that is an installation position of the sensor 9 and is any position between the above-described inlet piping position Pi and the above-described outlet piping position Pe is referred to as an intermediate position Pm. The definition is followed below, and, according to the definition, the above-described sensor 9 is installed in at least one of the inlet piping position Pi, the outlet piping position Pe, and the intermediate position Pm. Note that the inlet piping portion 83 and the outlet piping portion 84 are present further upstream and downstream, which is not illustrated in FIGS. 2 to 4.

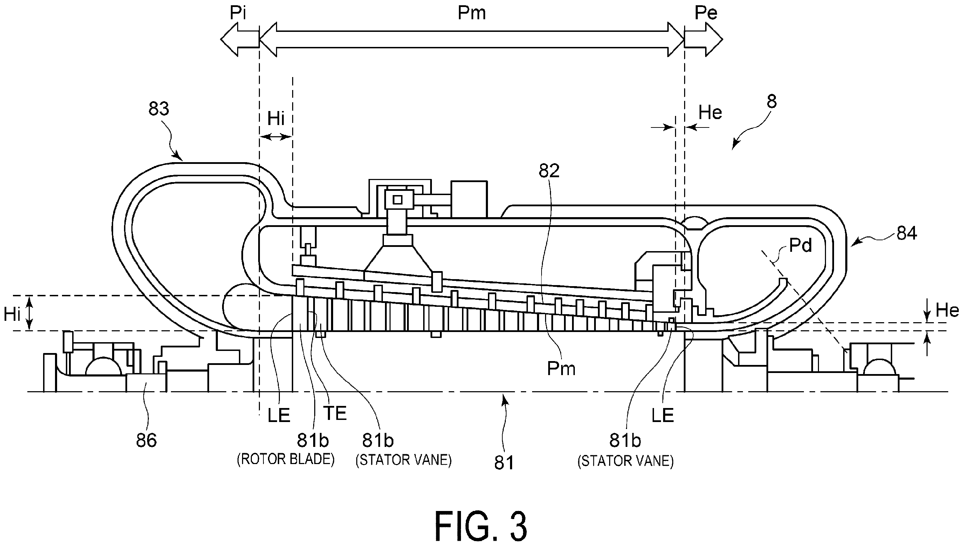

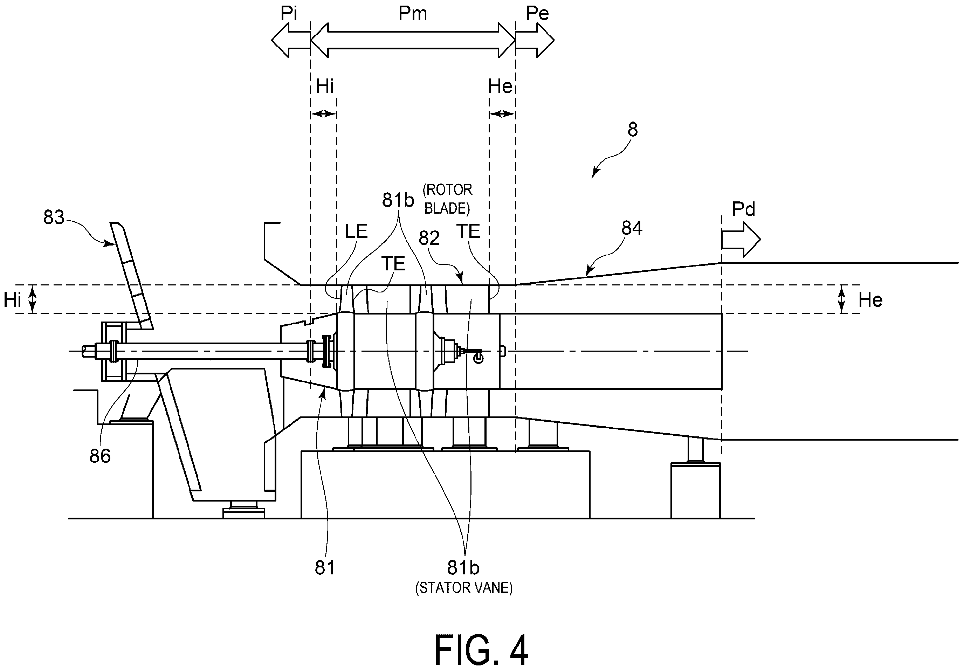

More specifically, the compressor 8 illustrated in FIG. 2 is a compressor of a turbocharger, and is an example of a centrifugal compressor. In the embodiment illustrated in FIG. 2, a full blade and a splitter blade are provided in the impeller, but the leading edge LE of the blade 81b (rotary blade) located furthest upstream and the trailing edge TE of the blade 81b located farthest downstream are a full blade. On the other hand, the compressor 8 illustrated in FIGS. 3 to 4 is an example of an axial flow compressor. The axial flow compressor includes a casing (housing portion 82), a main shaft (rotor shaft 86) provided in the casing, the impeller 81 formed of a plurality of rotor blades (81b, rotary blades) disposed along an axial line direction of the main shaft, and a stator vane (81b) disposed between the rotor blades that are located at the front and back in the axial line direction of the main shaft. The axial flow compressor illustrated in FIG. 3 is a gas turbine compressor, an axial-flow blower, or the like, and the axial flow compressor illustrated in FIG. 4 is a boiler axial-flow fan. Then, in both of the axial flow compressors, the blade 81b located furthest upstream is a rotor blade (rotary blade), and the blade 81b located farthest downstream is a stator vane.

### Description of Surging Precursor Detecting Device 1

Then, the surging precursor detecting device 1 detects a precursor of a surge of the compressor 8, based on time series data D obtained by continuously acquiring a detection value (sensor value x) of at least one sensor 9 installed as described above with a lapse of time, for example, periodically. The time series data D is data indicating a shift in a state quantity in a prescribed period defined arbitrary, and may be configured to include a set of sensor values x associated with information such as time and an acquisition order, for example, or may be a set of sensor values x arranged in detection order. The above-described prescribed period may be a period such that a prescribed number of sensor values x are included.

More specifically, for example, in some embodiments, as illustrated in FIG. 1, the surging precursor detecting device 1 is connected to the sensor 9, and a detection value (sensor value x) of the sensor 9 during operation of the compressor 8 may be input in real time. Then, each time the sensor value x is collected for the prescribed period, processing (precursor detection processing) of detecting a precursor of a surge may be performed as described below, and detection processing can be performed on the time series data D as a subject including the latest sensor value x. At this time, all of the sensor values x being input may not be a subject for the processing. For example, data for a certain period between the time series data D in a certain prescribed period and the time series data D in a next prescribed period may not be a subject for the processing. In other words, acquisition of time series data D may be performed periodically. In this way, even when the processing performance of the surging precursor detecting device 1 is relatively poor, the precursor detection processing can be always performed on the time series data D including the latest sensor value x, and a real-time characteristic can be ensured.

Details of the surging precursor detecting device 1 will be described below with reference to FIGS. 1 to 8B.

As illustrated in FIG. 1, the surging precursor detecting device 1 includes an acquisition unit 2, an analysis unit 3, and a detecting unit 4. The configurations will be described on the assumption that the sensor 9 is a pressure sensor and the sensor value x is a detection value of pressure.

Note that the surging precursor detecting device 1 is constituted by a computer, and includes a processor 11 such as a CPU and a storage device 12 such as a memory, namely, a ROM and a RAM, or the like. The storage device 12 may include an external storage device. Then, the processor 11 performs operation (such as computation of data) according to an instruction of a program (surging precursor detecting program 10) loaded into a memory (main storage device), and thus each of the above-described functional units included in the surging precursor detecting device 1 is realized. In other words, the above-described surging precursor detecting program 10 is software for causing the computer to realize each of the functional units described below, and may be stored in a storage medium capable of being read by the computer.

The acquisition unit 2 is a functional unit configured to acquire the time series data D of the above-described state quantity in at least one position of the inlet piping position Pi, the outlet piping position Pe, and the intermediate position Pm described above. The inlet piping position Pi is any position in the inlet piping portion 83. The outlet piping position Pe is any position in the outlet piping portion 84. The intermediate position Pm is any position between the inlet piping position Pi and the outlet piping position Pe, and may be a position suitable for capturing a stalling phenomenon of the blade 81b, such as the vicinity of the leading edge LE and the vicinity of the trailing edge TE of the blade 81b, for example. Then, the acquisition unit 2 acquires, as the time series data D, a time series of the sensor value x of the sensor 9 installed in at least one of the positions.

The analysis unit 3 is a functional unit configured to perform a chaotic time series analysis on the time series data D acquired by the above-described acquisition unit 2 with the number of embedded dimensions (number of reconstruction dimensions) being not less than three. The chaotic time series analysis is an analytical technique (time series analysis) for mathematically describing the nature of a phenomenon from the time series data D, based on a deterministic chaotic theory. The state quantity detected by the sensor 9 is one-dimensional information, but it is considered that the state quantity appears in a deterministic manner as a complex result of various elements in the pipe line system, and an unstable fluid flow phenomenon in the pipe line system is evaluated by a chaotic time series analysis.

More specifically, in a chaotic time series analysis, an attractor A (set that creates a stable state of a system) is reconstructed from the time series data D, and features (analysis value R, the same hereinafter) of the reconstructed attractor A are calculated. In other words, features of the attractor A are obtained as a result of the analysis.

Specifically, the number of embedded dimensions and a time delay are defined and mapped onto time delay coordinates having the number of dimensions (number of coordinate axes). For example, assuming that a value of the state quantity at each time t included in the time series data D is x(t), the number of embedded dimensions is three, and the time delay is T, the time series data D is mapped to a time delay coordinate system having three dimensions of x(t), x(t - T), and x (t - 2T). In this way, an orbit on the attractor A behind the time series data D can be reconstructed. At this time, when the number of dimensions is less than or equal to 2, an intersection may occur in the orbit of the attractor A. An occurrence of the intersection means that a solution does not define uniquely because an orientation of the orbit is different regardless of the same state. Thus, in the present embodiment, the number of embedded dimensions is set to not less than three.

Further, features of the above-described attractor A determined by the analysis unit 3 may be at least one of features of a plurality of types such as, for example, a Lyapunov exponent such as a maximum Lyapunov exponent, Kolmogorov-Sinai entropy (KS entropy), or a translation error amount. Note that the Lyapunov exponent is an indicator indicating whether orbital instability (initial value sensitivity or unpredictability) that is a characteristic of chaos is included, and indicates that the orbital instability is included when at least the maximum Lyapunov exponent is positive. Further, KS entropy is represented by a total value of positive Lyapunov exponents (by a theorem of pesin), and a change in the orbital instability can be more sensitively captured.

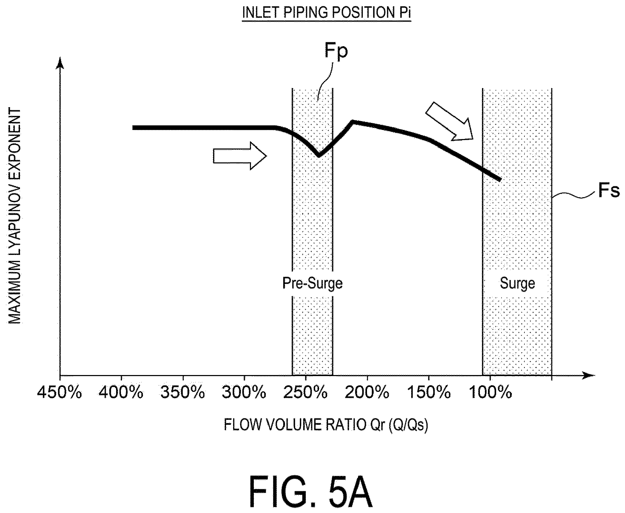

The detecting unit 4 is a functional unit configured to detect a precursor of a surge, based on an analysis value R (features) obtained by the chaotic time series analysis by the above-described analysis unit 3. More specifically, the detecting unit 4 may be configured to detect a precursor of a surge, based on the amount of change in the analysis value R caused by a change in operation condition of the compressor 8. For example, the operation condition of the compressor 8 may be defined by a pressure ratio P of the compressor 8 and a flow rate of a fluid flowing into the housing portion 82 from the inlet piping portion 83. Alternatively, the above-described operation condition may be defined by a flow volume ratio Qr (Q/Qs) of an inflow (actual flow rate Q) of a fluid into the housing portion 82 to a surge occurrence flow rate Qs determined according to the operation condition at the time of acquisition (see FIGS. 5A to 7B described below).

Further, a precursor of the surge described above may include a precursor of a pre-surge. The pre-surge is a phenomenon similar to a surge, but is an operating state in which operation of the compressor 8 can continue. More specifically, the pre-surge is a state in which a flow rate decreases, but a backflow of a compressed fluid discharged from the compressor 8 does not occur. The pre-surge may occur before an occurrence of a surge, and is a type of a precursor of a surge. Note that a surge may occur without a pre-surge depending on an operation condition. Particularly, the surge appears to occur in the number N of revolutions (rotational speed) on a high-speed side. Further, for example, the above-described analysis value R may include at least one of the features of the attractor A described above, or may include an indicator such as other features capable of evaluating a chaotic characteristic other than those described above.

As described above, the reason why the surging precursor detecting device 1 is constituted is because the inventors of the present invention have found out through diligent research that the analysis value R obtained by the chaotic time series analysis changes before an occurrence of a surge (hereinafter simply referred to as a surge as appropriate) including a pre-surge depending on an operation condition. According to the new knowledge, a precursor of a surge and a precursor of a pre-surge can be detected by monitoring the above-mentioned analysis value during operation of the compressor 8.

This point will be described with reference to FIGS. 5A to 7B.

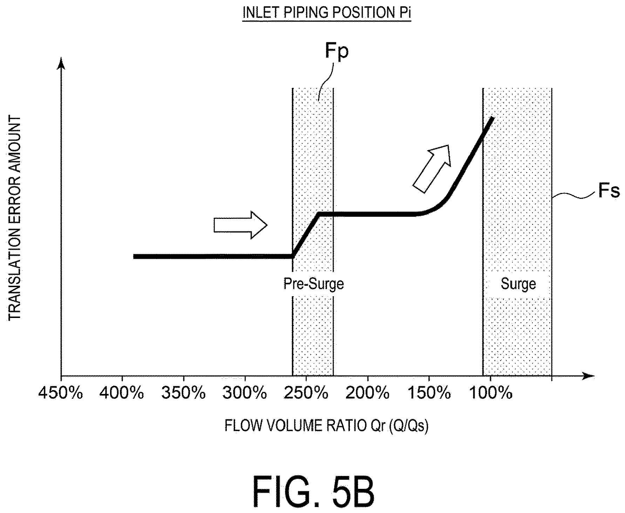

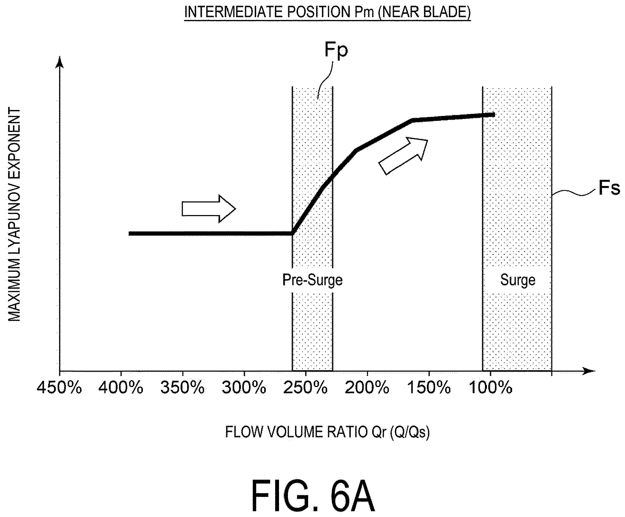

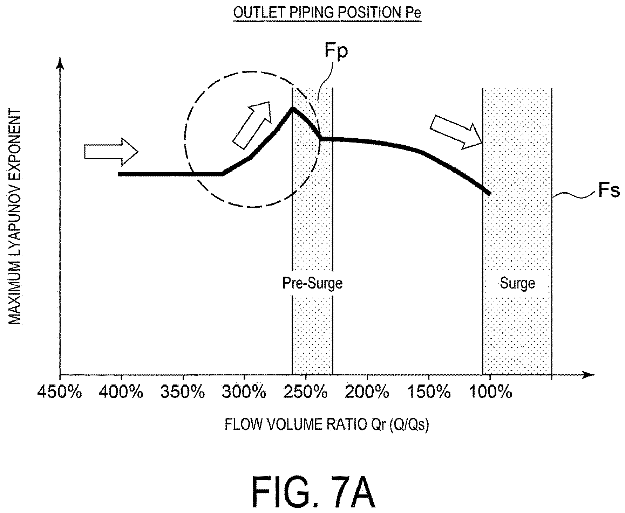

FIGS. 5A to 5B are diagrams showing a relationship between the analysis value R obtained from the time series data D of a pressure value in the inlet piping position Pi, and the flow volume ratio Qr according to the embodiment of the present invention. FIGS. 6A to 6B are diagrams showing a relationship between the analysis value R obtained from the time series data D of a pressure value in the intermediate position Pm (near the blade), and the flow volume ratio Qr according to the embodiment of the present invention. FIGS. 7A to 7B are diagrams showing a relationship between the analysis value R obtained from the time series data D of a pressure value at the outlet piping position Pe, and the flow volume ratio Qr according to the embodiment of the present invention. The analysis value R in FIGS. 5A, 6A, and 7A is a maximum Lyapunov exponent. Further, the analysis value R in FIGS. 5B, 6B, and 7B is a translation error amount.

The horizontal axis of the graph shown in FIGS. 5A to 7B is a flow rate. More specifically, the horizontal axis is the flow volume ratio Qr (Q/Qs) described above. Note that the surge occurrence flow rate Qs is a flow rate at a boundary (surge line) between a surge region Fs and a normal operation region that is not the surge region Fs. The actual flow rate Q is obtained by a measurement by a flow rate sensor 92 that is installed in the pipe on the inlet side and can measure a flow rate, for example. The vertical axis is the above-described analysis value R (hereinafter simply referred to as the analysis value R) obtained by the chaotic time series analysis of the time series data D of a state quantity (herein pressure).

Specifically, the analysis value R is the maximum Lyapunov exponent in FIGS. 5A, 6A, and 7A and is the translation error amount in FIGS. 5B, 6B, and 7B. All the time series data D is also constituted by the sensor value x in the number N of revolutions on approximately the same low-speed side. The number N of revolutions on the low-speed (low-rotation) side may be set, for example, such that a B parameter is smaller than a first prescribed value, and the number N of revolutions on the high-speed (high-rotation) side described later may be set such that the B parameter is greater than a second prescribed value (first prescribed value ≤ second prescribed value). Note that the number N of revolutions may be differentiated by a rotational peripheral speed (or the number of Mach) in an impeller outside diameter portion.

Further, a line shown in FIGS. 5A to 7B indicates a trend of a calculated value of the analysis value R. The trend is determined by a well-known technique such as, for example, a least squares method performed on a calculated value of the analysis value R. In the examples in FIGS. 5A to 7B, a pre-surge region Fp is observed, but the surge region Fs and the pre-surge region Fp being illustrated are illustrated based on an observation.

As shown in FIGS. 5A to 7B, in the number N of revolutions on the low-speed side, the trend changes (increases or decreases) before entering the surge region Fs as the flow volume ratio Qr approaches the surge (100%) (toward the right side of the paper) in both of the maximum Lyapunov exponent and the translation error amount. Note that the KS entropy has the trend similar to that of the maximum Lyapunov exponent and is omitted.

Specifically, in the example in FIG. 5A, the maximum Lyapunov exponent is a result of an analysis of the time series data D (hereinafter, inlet time series data Di) constituted by a plurality of detection values of the sensor 9 (inlet sensor) installed in the inlet piping position Pi described above, but has a generally constant trend on the side (on the left side of the paper) on which the flow volume ratio Qr is greater than that in the pre-surge region Fp. However, the maximum Lyapunov exponent turns to a decreasing trend after exceeding the pre-surge region Fp to the surge region Fs. As shown in FIG. 5B, the similar trend also applies to the translation error amount obtained from the same time series data D, but the translation error amount is different in that the translation error amount turns to an increasing trend opposite to FIG. 5A after exceeding the pre-surge region Fp to the surge region Fs.

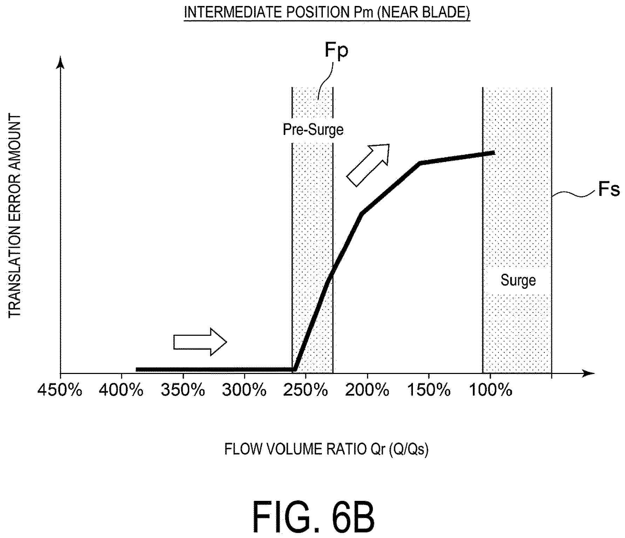

In the example in FIG. 6A, the maximum Lyapunov exponent is a result of an analysis of the time series data D (hereinafter, near-blade time series data Dm) constituted by a plurality of detection values of the sensor 9 (near-blade sensor) installed in the intermediate position Pm described above, but has a generally constant trend on the side (on the left side of the paper) on which the flow volume ratio Qr is greater than that in the pre-surge region Fp. However, the maximum Lyapunov exponent turns to an increasing trend that can be regarded as monotonous between the pre-surge region Fp and the surge region Fs. As shown in FIG. 6B, the similar trend also applies to the translation error amount obtained from the same time series data D.

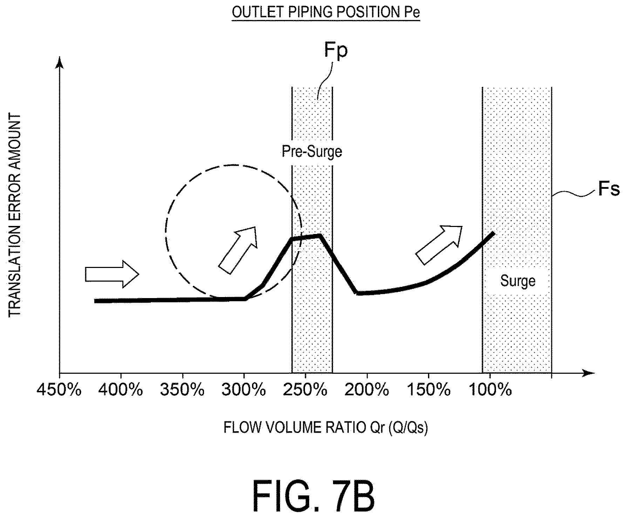

In the example in FIG. 7A, the maximum Lyapunov exponent is a result of an analysis of the time series data D (hereinafter, outlet time series data De) constituted by a plurality of detection values of the sensor 9 (outlet sensor) installed in the outlet piping position Pe described above, but turns to an increasing trend from a generally constant trend immediately before the pre-surge region Fp and also turns to a decreasing trend after exceeding the pre-surge region Fp to the surge region Fs. As shown in FIG. 7B, the similar trend also applies to the translation error amount obtained from the same time series data D, but the translation error amount is different in that the translation error amount turns to an increasing trend opposite to FIG. 7A after exceeding the pre-surge region Fp up to the surge region Fs.

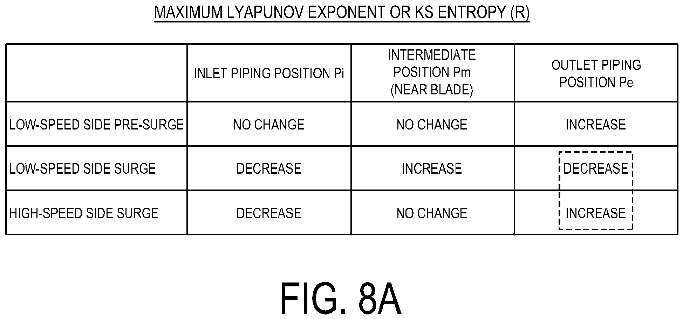

Then, FIGS. 5A to 7B described above are based on various types of the time series data D obtained when the compressor 8 operates in a certain number N of revolutions on the low-speed side as described above. However, the inventors of the present invention similarly confirm a case where the compressor 8 operates in both of the number N of revolutions on the high-speed side higher than the number N of revolutions on the low-speed side and an intermediate number N of revolutions between the number N of revolutions on the low-speed side and the number N of revolutions on the high-speed side. Drawings in the number N of revolutions on the high-speed side and the intermediate number N of revolutions are omitted, but results thereof are summarized in tables in FIGS. 8A to 8B.

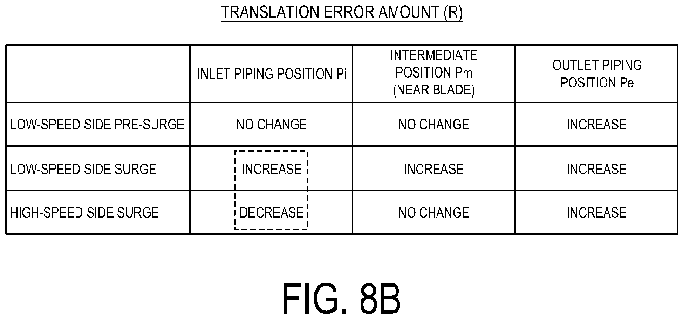

FIGS. 8A to 8B are diagrams showing a trend of a change in analysis value indicating a precursor of a surge according to the embodiment of the present invention according to an installation position of the sensor 9. The analysis value R is the maximum Lyapunov exponent or the KS entropy (hereinafter, the maximum Lyapunov exponent and the like) in FIG. 8A, and is the translation error amount in FIG. 8B. Note that the above-described intermediate number N of revolutions is the number N of revolutions that is difficult to determine between the high-speed side and the low-speed side, and a result of the number N of revolutions being just intermediate is a result similar to that in FIGS. 5A to 7B (low-speed side), and is thus omitted in FIGS. 8A to 8B.

As a result, as shown in FIGS. 8A to 8B, a precursor of a surge (low-speed side surge) on the low-speed side of the number N of revolutions of the compressor 8 can be captured by detecting a change in the above-described analysis value R based on the time series data D obtained in each of the inlet piping position Pi, the intermediate position Pm, and the outlet piping position Pe as the flow volume ratio Qr decreases (approaches 100%). Specifically, a decrease in the maximum Lyapunov exponent and the like or an increase in the translation error amount based on the inlet time series data Di is detected. An increase in the maximum Lyapunov exponent and the like and the translation error amount based on the near-blade time series data Dm is detected. A decrease in the maximum Lyapunov exponent and the like or an increase in the translation error amount based on the outlet time series data De is detected. The detection allows detection of a low-speed side surge.

Further, a pre-surge is observed on the low-speed side, and only the above-described analysis value R based on the outlet time series data De changes to an increasing trend as the flow volume ratio Qr decreases before entering the pre-surge region Fp. Thus, a precursor of a pre-surge on the low-speed side can be captured by detecting an increase in the above-described analysis value R based on the outlet time series data De as the flow volume ratio Qr decreases.

On the other hand, a precursor of a surge (high-speed side surge) on the high-speed side of the number N of revolutions of the compressor 8 can be captured by detecting a change in the above-described analysis value R based on the inlet time series data Di or the outlet time series data De as the flow volume ratio Qr decreases. Specifically, a decrease in the maximum Lyapunov exponent and the like or the translation error amount based on the inlet time series data Di is detected. An increase in the maximum Lyapunov exponent and the like or the translation error amount based on the outlet time series data De is detected. The detection allows detection of a high-speed side surge.

The detecting unit 4 detects a precursor of a surge, based on the results (FIGS. 8A to 8B) as described above. Specifically, in some embodiments, the detecting unit 4 may be configured to detect, as a precursor of a surge, a case where the amount of change in the above-described analysis value R of at least one type being obtained by the chaotic time series analysis of the time series data D of any of the inlet time series data Di, the near-blade time series data Dm, and the outlet time series data De described above changes beyond a threshold value L determined according to a type of the above-described analysis value R as an operation condition changes. In this way, a precursor of a surge can be accurately detected.

For example, a change in the above-described operation condition may be acquired by monitoring a change in the actual flow rate Q, or monitoring a change in the flow volume ratio Qr. In the latter case, a compressor map M of the compressor 8 as a subject for precursor detection may be stored in the storage device 12 or the like, and the surge occurrence flow rate Qs corresponding to the actual flow rate Q and the pressure ratio P (measurement value) may be obtained based on the compressor map M. Although there is a possibility that a surge line may move over time, a trend change in the above-described analysis value R can be captured even when the movement occurs. In some other embodiments, a change in the actual flow rate Q may be used.

When a precursor of a surge depends on the number of revolutions of the compressor 8 as described above, the above-described threshold value may be determined according to a type of the analysis value R and the number N of revolutions. In this case, threshold information such as a function or a map that has a relationship among the threshold value L, the type of the analysis value R, and the number N of revolutions of the compressor 8 may be prepared in advance, and the threshold value L may be calculated based on the threshold information B.

Further, for example, in a case where the plurality of types of analysis values R are monitored, it may be determined that there is a precursor of a surge when one type of the analysis value R exceeds the threshold value L, or when all of a plurality of detection conditions, such as a case where two or more of the analysis values R exceed the respective threshold value L, are satisfied. Further, when a precursor of a surge depends on the number N of revolutions of the compressor 8 as described above, the above-described threshold value L may be determined according to a type of the analysis value R and the number N of revolutions (described later).

Then, in some embodiments, the detecting unit 4 may determine that there is a precursor of a surge when an absolute value of the amount of change in the above-described analysis value R exceeds the above-described threshold value L. Alternatively, in some other embodiments, a direction of a change in the analysis value R may be added to the detection condition, as described next.

In other words, in some embodiments, for the analysis value R obtained based on the outlet time series data De, the detecting unit 4 may be configured to detect, as a precursor of a surge, a case where the Lyapunov exponent and the like increase beyond an outlet part threshold value Le as the flow volume ratio Qr decreases on the high-speed side of the number N of revolutions of the impeller 81, or a case where the Lyapunov exponent and the like change (decrease for a low-speed side surge and increase for a low-speed side pre-surge) beyond the outlet part threshold value Le as the flow volume ratio Qr decreases on the low-speed side of the number N of revolutions, according to FIGS. 8A to 8B. The detecting unit 4 may be configured to detect, as a precursor of a surge, a case where the translation error amount increases beyond the outlet part threshold value Le as the flow volume ratio Qr decreases.

Similarly, in some embodiments, for the analysis value R obtained based on the inlet time series data Di, the detecting unit 4 may be configured to detect, as a precursor of a surge, a case where the Lyapunov exponent and the like decrease beyond an inlet part threshold value Li as the flow volume ratio Qr decreases. The detecting unit 4 may be configured to detect, as a precursor of a surge, a case where the translation error amount decreases beyond the inlet part threshold value Li as the flow volume ratio Qr decreases on the high-speed side of the number N of revolutions of the impeller 81, or a case where the translation error amount increases beyond the inlet part threshold value Li as the flow volume ratio Qr decreases on the low-speed side of the number N of revolutions.

Further, in some embodiments, for the analysis value R obtained based on the near-blade time series data Dm, the detecting unit 4 may detect, as a precursor of a surge, a case where the Lyapunov exponent and the like and the translation error amount increase beyond a vicinity part threshold value Lm as the flow volume ratio Qr decreases on the low-speed side of the number N of revolutions.

Note that each of the outlet part threshold value Le, the inlet part threshold value Li, and the vicinity part threshold value Lm is appropriately determined according to a type of the analysis value R, the number N of revolutions, a surge, or a pre-surge.

In describing the embodiment illustrated in FIG. 1, the sensor value x detected by the sensor 9 is input to the surging precursor detecting device 1 together with a measurement value of the flow rate sensor 92 capable of measuring the actual flow rate Q at the time of the detection of the sensor value x and a measurement value of the pressure ratio sensor 93 capable of measuring the pressure ratio P. Then, the surging precursor detecting device 1 stores the sensor values x, the actual flow rate Q, and the pressure ratio P in association with one another in a predetermined storage region of the storage device 12. Then, the above-described acquisition unit 2 acquires the time series data D from the above-described storage region of the storage device 12. Further, the acquisition unit 2 is connected to the above-described analysis unit 3, and when the time series data D is obtained, the acquisition unit 2 inputs the time series data D to the analysis unit 3.

When the time series data D is input, the analysis unit 3 performs the chaotic time series analysis on the input time series data D, and inputs the result to the detecting unit 4. The detecting unit 4 is connected to each of the analysis unit 3 and the acquisition unit 2, and the analysis value R obtained by the chaotic time series analysis, and the actual flow rate Q and the pressure ratio P associated with the time series data D from which the analysis value R is obtained are input. Note that the actual flow rate Q and the pressure ratio P associated with the time series data D may be a statistical value such as an average of, for example, a plurality of measurement values obtained between pieces of the corresponding time series data D.

Then, the detecting unit 4 acquires the surge occurrence flow rate Qs corresponding to the actual flow rate Q and the pressure ratio P, based on the compressor map M, and thus calculates the above-described flow volume ratio Qr, and stores the analysis value R and the flow volume ratio Qr in association with each other. Since the analysis value R and the flow volume ratio Qr are obtained each time one piece of the time series data D is processed, the amount of change in the above-described analysis value R is determined by processing the plurality of pieces of the time series data D. Thus, the detecting unit 4 detects a precursor of a surge by comparing the determined amount of change of the analysis value R with the threshold value L.

However, the present invention is not limited to the embodiment described above. In some other embodiments, the detecting unit 4 may detect, as a precursor of a surge, a case where magnitude of the above-described analysis value R obtained by the chaotic time series analysis of various types of the time series data D described above exceeds the above-described threshold value as an operation condition changes.

According to the above-described configuration, the chaotic time series analysis (the number of embedded dimensions is not less than three) is performed on the time series data D of a state quantity having a correlation with the internal pressure of the compressor such as, for example, pressure, noise, and vibration, and a precursor of a surge of the compressor 8 is also detected based on the analysis value R such as, for example, the maximum Lyapunov exponent, the KS entropy, and the translation error amount obtained by the chaotic time series analysis. In this way, a precursor of a pre-surge and a precursor of a surge of the compressor 8 can be appropriately detected.

In some embodiments in the embodiments described above, as illustrated in FIG. 1, the surging precursor detecting device 1 may further include a suppression unit 5 configured to perform suppression control for preventing an occurrence of a surge when a precursor of the surge is detected. The suppression control may be a well-known technique, and may be control for reducing a discharge force of the compressor 8 or increasing a passing flow rate of the compressor 8, for example. Specifically, a fluid may be returned from the outlet side to the inlet side by setting, from a closed valve state to an open valve state, a bypass valve (not illustrated) installed in a bypass pipe (not illustrated) that connects the inlet and the outlet of the compressor 8. Alternatively, a fluid may be released to the outside by setting, from a closed valve state to an open valve state, a blow-off valve 8v installed on the outlet side or the like of the compressor 8.

In the embodiment illustrated in FIG. 1, the suppression unit 5 is configured to be able to control the blow-off valve 8v. Specifically, the blow-off valve 8v may be controlled by being configured to be able to transmit a command to a control device capable of controlling a degree of opening of the blow-off valve 8v. When a precursor of a surge is detected, the detection of the precursor is output to an alarm device 6 (output device) capable of outputting an alarm via sound and screen display of, for example, a speaker, a display, and the like to notify an operator and the like, and the above-described suppression control is performed. Note that, in some other embodiments, the suppression unit 5 may perform the suppression control without outputting an alarm.

According to the above-described configuration, when a precursor of a surge is detected, an operation of avoiding an occurrence of the surge is performed by increasing a discharge force of the compressor 8 or increasing a passing flow rate such that the surge does not occur. In this way, an occurrence of the surge can be avoided.

Next, some embodiments related to an installation position of the sensor 9 described above will be described.

As described above, an installation position of the sensor 9 needed to perform precursor detection of a surge by using the analysis value R of the chaotic time series analysis is not limited to the vicinity of the blade, and may be the inlet piping position Pi, the outlet piping position Pe, or the intermediate position Pm. In other words, the inventors of the present invention have found out, as new knowledge, that an installation position of the sensor 9 can also be either the outlet piping position Pe or the inlet piping position Pi (see FIGS. 8A to 8B).

In this regard, for example, when the chaotic time series analysis is performed on the time series data D in a position where a stall is captured, such as the vicinity of the blade, it is conceivable that the analysis value R mainly captures instability due to the stall. However, as described above, the entire pipe line system is related to an occurrence of a surge of the compressor 8. Thus, the inventors of the present invention have considered that a precursor of a surge is more likely to be detected by evaluating the surge with a fluctuation waveform (time series data D) of a state quantity obtained on the downstream side or the upstream side of the blade rather than the vicinity of the blade.

More specifically, as illustrated in FIGS. 2 to 4, in some embodiments, the outlet piping position Pe and the inlet piping position Pi described above are a region (region that is less likely to be affected) in which a fluctuation in state quantity due to passage of the blade 81b and an influence of a stalling frequency occurring in the blade 81b are less likely to be detected. On the other hand, the intermediate position Pm described above is a region in which a fluctuation in state quantity due to passage of the blade 81b and a stalling frequency occurring in the blade 81b are clearly captured.

Specifically, as illustrated in FIGS. 2 to 4, the outlet piping position Pe may be any position in the outlet piping portion 84 separated downstream from the trailing edge TE of the blade 81b by not less than an outlet height He of the impeller 81. The outlet height He is a width of the illustrated flow path. More specifically, in some embodiments, the outlet piping position Pe may be any position separated downstream by not less than three times (3 × He) the outlet height He. In some other embodiments, the outlet piping position Pe may be any position located downstream of a diffuser outlet Pd. Further, in a case of the centrifugal compressor (FIG. 2), in some embodiments, the outlet piping position Pe may be any position located downward of a scroll flap portion Pt. The region is a region (region that is less likely to be affected) in which a change in rotational static pressure within the scroll due to a change in operating point of the compressor 8 is less likely to be detected.

Further, the above-described inlet piping position Pi may be any position in the inlet piping portion 83 separated upstream from the leading edge LE of the blade 81b by not less than an inlet height Hi of the impeller 81. The inlet height Hi is a width of the illustrated flow path. More specifically, in some embodiments, the inlet piping position Pi may be any position separated upstream by not less than three times (3 × Hi) the inlet height Hi.

On the other hand, the above-described intermediate position Pm may be a position between the outlet piping position Pe and the inlet piping position Pi. In the embodiment illustrated in FIGS. 2 to 4, the intermediate position Pm is located between a position separated downstream from the trailing edge TE of the blade 81b by the outlet height He of the impeller 81 and a position separated upstream from the leading edge LE of the blade 81b by the inlet height Hi of the impeller 81. In this way, a precursor of a surge can be appropriately detected.

According to the configuration described above, a precursor of a surge can be detected without installing the sensor 9 in the vicinity of the blade 81b. In other words, an installation position (measurement position) of the sensor 9 installed in order to obtain the time series data D can be set to the inlet piping position Pi and the outlet piping position Pe instead of the intermediate position Pm such as the vicinity of the blade 81b. Thus, a degree of freedom related to an installation position of the sensor 9 can be increased, and ease of measuring a state quantity such as pressure can be greatly improved.

Next, some embodiments related to the above-described detecting unit 4 will be described.

As shown in FIGS. 8A to 8B, a change in the analysis value R due to a change in operation condition (hereinafter simply referred to as a change in the analysis value R), which can be detected as a precursor of a surge, may be a reverse trend according to the number N of revolutions of the compressor 8. For example, as indicated by a dashed line in FIG. 8A, a change in the analysis value R based on the outlet time series data De decreases in a detection condition of a precursor of a low-speed side surge, whereas a change in the analysis value R based on the outlet time series data De increases in a detection condition of a precursor of a high-speed side surge. Further, as indicated by a dashed line in FIG. 8B, a change in the analysis value R based on the inlet time series data Di increases in a detection condition of a precursor of a low-speed side surge, whereas a change in the analysis value R based on the inlet time series data Di decreases in a detection condition of a precursor of a high-speed side surge.

Thus, in some embodiments, the detecting unit 4 may be configured to detect a precursor of a surge, based on the analysis value R and the number N of revolutions of the impeller 81. In the embodiment illustrated in FIG. 1, the surging precursor detecting device 1 is configured to receive an input of a detection value of a rotational speed sensor 94 capable of detecting the number N of revolutions of the compressor 8. Further, the above-described threshold information B is stored in the storage device 12. Then, the detecting unit 4 receives an input of a measurement value of the number N of revolutions from the acquisition unit 2, and, when the analysis value R is input, the detecting unit 4 acquires the threshold value L according to a type of the analysis value R and a value of the number N of revolutions by referring to the above-described threshold information B, and also detects a precursor of a surge, based on the analysis value R and the acquired threshold value L.

According to the above-described configuration, a precursor of a surge is detected in consideration of the number N of revolutions of the impeller 81. As a result of diligent research, the inventors of the present invention has found out that behavior of the analysis value R changes according to the number N of revolutions of the impeller 81. For example, there may be a case where a trend of a change in the analysis value R corresponding to a change in operation condition may be reversed according to the number N of revolutions of the impeller 81 (see FIGS. 8A to 8B) and there may be a case where the analysis value R also needs to be adaptively adjusted for an appropriate value of the threshold value L. Thus, by considering the number N of revolutions of the impeller 81, detection accuracy of a precursor of a surge can be improved.

However, the present invention is not limited to the present embodiment. Depending on an installation position of the sensor 9 and a type of the analysis value R, a trend of a change in the analysis value R at the time of a precursor of a surge may not depend on the number of revolutions (see FIGS. 8A to 8B). Further, a value of a threshold value may also be defined in a uniform manner regardless of the number of revolutions. Thus, in some other embodiments, the surging precursor detecting device 1 may be configured to detect a precursor of a surge without considering the number N of revolutions.

Further, in some embodiments, the detecting unit 4 may be configured to detect a precursor of a surge, based on a plurality of the analysis values R obtained by the chaotic time series analysis of each of at least two types of the time series data D among the outlet time series data De, the inlet time series data Di, and the near-blade time series data Dm described above. The above-described at least two types of the time series data D are obtained at the same time by a plurality of the sensors 9 installed in the compressor 8.

For example, as shown in FIGS. 8A to 8B, in the detection condition for a precursor of the low-speed side surge, the maximum Lyapunov exponent and the like based on the inlet time series data Di decrease (FIG. 8A), and the translation error amount increases (FIG. 8B). Only when the detecting unit 4 detects both of them, it may be determined that there is a precursor of the surge. Similarly, the maximum Lyapunov exponent and the like based on the outlet time series data De decrease (FIG. 8A), and the translation error amount increases (FIG. 8B), whose trend is reversed. Thus, when the detecting unit 4 detects both of them, it may be determined that there is a precursor of the surge.

In this way, an occurrence of false detection so as to determined that there is a precursor when one of a plurality of conditions is satisfied due to some sort of reason can be prevented in a case where a precursor of a surge does not actually occur, and reliability of detection of a precursor of a surge can be increased.

According to the above-described configuration, the chaotic time series analysis is performed on at least two types of the time series data D obtained at the same time from each of the outlet piping position Pe, the inlet piping position Pi, and the intermediate position Pm, and a precursor of a surge is detected based on the plurality of analysis values R obtained by the chaotic time series analysis.

In this way, reliability of detection of a precursor of a surge can be increased.

Further, in some embodiments, the above-described detecting unit 4 may be configured to determine whether, when detecting a precursor of a surge, the detected precursor of the surge is a precursor or an occurrence of a pre-surge, based on the plurality of analysis values R. In reality, when a surge occurs, a coping method of, for example, completely opening the blow-off valve 8v and the like is needed, and efficiency of the compressor 8 is greatly reduced. On the other hand, for a pre-surge, an operation of the compressor 8 can be achieved, and a coping method of keeping operating the compressor 8 or opening the blow-off valve 8v to a degree of opening smaller than full open can be enough. Thus, a decrease in operation efficiency can be suppressed by determining whether a detected precursor is a precursor of a pre-surge and performing a coping method according to the determination result.

In the example in FIG. 8A, the maximum Lyapunov exponent and the like based on the outlet time series data De increase in a detection condition of a precursor of the low-speed side pre-surge, and decreases in a detection condition of a precursor of a true surge that is not a pre-surge, but there is no change of a trend of the maximum Lyapunov exponent and the like based on the inlet time series data Di and the near-blade time series data Dm. Thus, when the maximum Lyapunov exponent and the like increase in the outlet time series data De and do not increase and decrease (hereinafter, do not change) in the inlet time series data Di or the near-blade time series data Dm, it may be determined that a detected precursor of a surge is a precursor of a pre-surge.

On the other hand, in FIG. 8B, the translation error amount based on the outlet time series data De increases in the detection condition of a precursor of the low-speed side pre-surge, and also increases in the detection condition of a precursor of the true surge. Thus, it is difficult to determine whether the detected precursor is a precursor of the low-speed side pre-surge or a precursor of the true surge in this situation. However, there is no change of a trend of the translation error amount based on the inlet time series data Di and the near-blade time series data Dm in a case of a precursor of the low-speed side pre-surge, and there is the change in a case of a precursor of the true surge. Thus, when the translation error amount increases in the outlet time series data De and does not change in the inlet time series data Di or the near-blade time series data Dm, it may be determined that a detected precursor of a surge is a precursor of a pre-surge.

Note that the two examples described above may be combined. For example, when the maximum Lyapunov exponent and the like based on the outlet time series data De increase and the translation error amount based on the inlet time series data Di or the near-blade time series data Dm does not change, it may be determined to be a precursor of a pre-surge. When the translation error amount based on the outlet time series data De and the maximum Lyapunov exponent and the like based on the inlet time series data Di or the near-blade time series data Dm do not change, it may be determined to be a precursor of a pre-surge.

According to the above-described configuration, the chaotic time series analysis is performed on at least two types of the time series data D obtained at the same time from each of the outlet piping position Pe, the inlet piping position Pi, and the intermediate position Pm, and whether a detected precursor of a surge is a precursor or an occurrence of a pre-surge is determined based on the plurality of analysis values R obtained by the chaotic time series analysis. In this way, a precursor or an occurrence of a pre-surge can be detected.

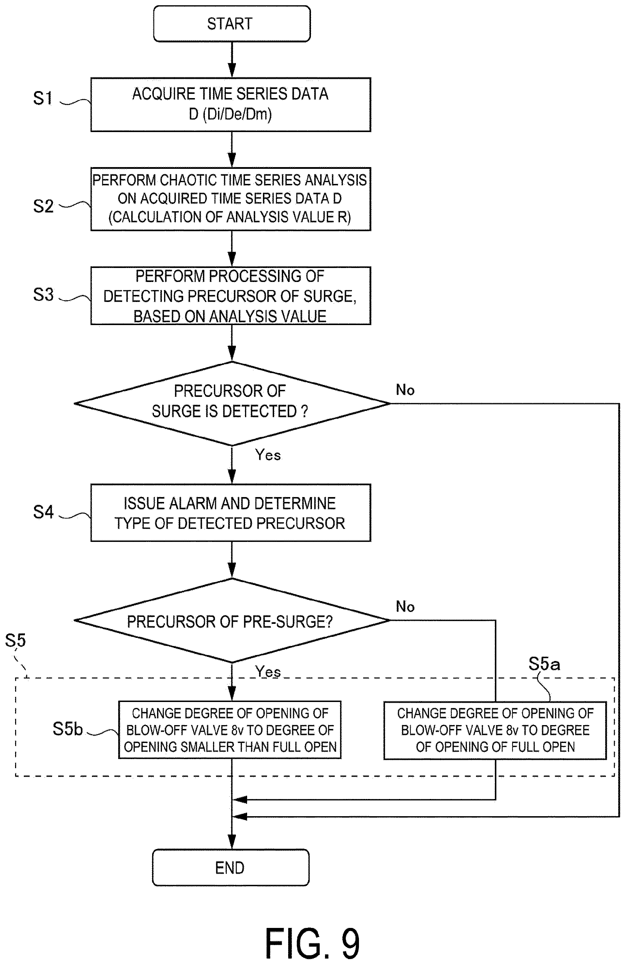

Next, a surging precursor detecting method corresponding to the processing of the above-described surging precursor detecting device will be described with reference to FIG. 9. FIG. 9 is a diagram illustrating the surging precursor detecting method according to the embodiment of the present invention. The surging precursor detecting method is a method of detecting a precursor of a surge of the compressor 8. As illustrated in FIG. 9, the surging precursor detecting method includes an acquisition step, an analysis step, and a detection step. The method will be described according to the flow illustrated in FIG. 9.

In step S1, the acquisition step is performed. The acquisition step is a step of acquiring the above-described time series data D of at least one of the inlet time series data Di, the outlet time series data De, and the near-blade time series data Dm described above. The acquisition step is similar to the processing content performed by the acquisition unit 2 described above, and thus details thereof will be omitted.

In step S2, the analysis step is performed. The analysis step is a step of performing the chaotic time series analysis on the time series data D acquired in the acquisition step described above with the number of embedded dimensions (the number of reconfiguration dimensions) being not less than three. The analysis step is similar to the processing content performed by the analysis unit 3 described above, and thus details thereof will be omitted.

In step S3, the detection step is performed. The detection step is a step of detecting a precursor of a surge, based on the above-described analysis value R obtained by the chaotic time series analysis in the analysis step described above. The detection step is similar to the processing content performed by the detecting unit 4 described above, and thus details thereof will be omitted.

In some embodiments, as illustrated in FIG. 9, the surging precursor detecting method may include a determination step (S4) of determining whether, when a precursor of a surge is detected in the detection step (S3) described above, the detected precursor of the surge is a precursor or an occurrence of a pre-surge, based on the plurality of analysis values R.

Further, in some embodiments, as illustrated in FIG. 9, the surging precursor detecting method may further include a suppression step (S5) of performing the suppression control described above when a precursor of a surge is detected. The suppression step is similar to the processing content performed by the suppression unit 5 described above, and thus details thereof will be omitted.

In the embodiment illustrated in FIG. 9, when a precursor of a surge is not detected in step S3, the flow is terminated. On the other hand, when a precursor of a surge is detected in step S3, the flow proceeds to step S4, and an alarm about the detection of the precursor of the surge is issued, and whether the precursor of the surge is a precursor of a pre-surge is determined (determination step). Then, the suppression step (S5) of suppressing the surge is performed based on the determination result.

Specifically, in the present embodiment, when the precursor of the surge is not a precursor of a pre-surge, the precursor of the surge is a precursor of a true surge, and thus a degree of opening of the blow-off valve 8v is set to a first degree of opening such as, for example, a full open in step S5a. On the other hand, when it is determined that the precursor of the surge is a precursor of a pre-surge, a degree of opening of the blow-off valve 8v is set to a second degree of opening (on a closed valve side) that is smaller than the first degree of opening in step S5b.

Note that an alarm may not be issued in step S4 described above. Further, timing of an alarm may be either before or after determination of a type of a precursor.

The present invention is not limited to the embodiments described above, and also includes a modification of the above-described embodiments as well as appropriate combinations of these modes.

The contents of the embodiments described above can be construed as follows, for example.
(1) A surging precursor detecting device (1) according to at least an embodiment of the present invention is a surging precursor detecting device (1) configured to detect a precursor of a surge of a compressor (8) including a housing portion (82) housing a blade (81b) including a rotary blade (81b) of an impeller (81) and configured to compress a fluid supplied from an inlet piping portion (83) and discharge the fluid to an outlet piping portion (84), and the surging precursor detecting device includes:
   an acquisition unit (2) configured to acquire time series data (D) of a state quantity having a correlation with internal pressure in at least one position of an inlet piping position (Pi) in the inlet piping portion (83), an outlet piping position (Pe) in the outlet piping portion (84), and an intermediate position (Pm) between the inlet piping position (Pi) and the outlet piping position (Pe);
   an analysis unit (3) configured to perform a chaotic time series analysis on the time series data (D) with the number of embedded dimensions being not less than three; and
   a detecting unit (4) configured to detect a precursor of the surge, based on an analysis value (R) obtained by the chaotic time series analysis.

According to the configuration of (1) described above, the chaotic time series analysis (the number of embedded dimensions is not less than three) is performed on the time series data (D) of a state quantity having a correlation with the internal pressure of the compressor (8) such as, for example, pressure, noise, and vibration, and a precursor of the surge of the compressor (8) is also detected based on the analysis value (R) such as, for example, the Lyapunov exponent, the KS entropy, and the translation error amount obtained by the chaotic time series analysis. In this way, a precursor of the pre-surge and a precursor of the surge of the compressor (8) can be appropriately detected.

(2) In some embodiments, in the configuration of (1) described above,
the detecting unit (4) is configured to detect a precursor of the surge, based on the analysis value (R) and the number (N) of revolutions of the impeller (81).

According to the configuration of (2) described above, a precursor of a surge is detected in consideration of the number (N) of revolutions of the impeller (81). As a result of diligent research, the inventors of the present invention has found out that behavior of the analysis value (R) changes according to the number (N) of revolutions of the impeller (81) (for example, see FIGS. 8A to 8B). Thus, by considering the number (N) of revolutions of the impeller (81), detection accuracy of a precursor of the surge can be improved.

(3) In some embodiments, in the configuration of (1) to (2) described above,
the detecting unit (4) is configured to detect a precursor of the surge, based on an amount of change in the analysis value (R) caused by a change in operation condition of the compressor (8).

According to the configuration of (3) described above, a precursor of a surge is detected based on the amount of change in the above-described analysis value (R) caused by a change in the operation condition of the compressor (8). In this way, detection accuracy of a precursor of the surge can be improved.

(4) In some embodiments, in the configuration of (3) described above,
the outlet piping position (Pe) is a position in the outlet piping portion (84) separated downstream from a trailing edge (TE) of the blade (81b) by not less than an outlet height of the impeller (81), and
the time series data (D) includes outlet time series data (De) constituted by a detection value of an outlet sensor (9) installed in the outlet piping position (Pe).

According to the configuration of (4) described above, a precursor of a surge is detected by using the time series data (D) obtained by a sensor (9) (outlet sensor (9)) installed in a position separated downstream from the trailing edge (TE) of the blade (81b) of the impeller (81) by the outlet height of the impeller (81). In this way, a precursor of the surge can be detected without installing the sensor (9) in the vicinity of the blade (81b). In other words, an installation position (measurement position) of the sensor (9) installed in order to obtain the time series data (D) can be set to the outlet piping position (Pe) instead of the intermediate position (Pm) such as the vicinity of the blade (81b). Thus, a degree of freedom related to an installation position of the sensor (9) can be increased, and ease of measuring the above-described state quantity can be greatly improved.

(5) In some embodiments, in the configuration of (4) described above,
the detecting unit (4) is configured to detect, as a precursor of the surge, a case where an amount of change in the analysis value (R) obtained by an analysis of the outlet time series data (De) by the analysis unit (3) changes beyond an outlet part threshold value (Le) determined according to a type of the analysis value (R) as the operation condition changes.

According to the configuration of (5) described above, a threshold value (L) of the amount of change in the analysis value (R) due to a change in the operation condition is determined according to a type of the analysis value (R) such as, for example, the Lyapunov exponent, the KS entropy, and the translation error amount, and a case where the amount of change in the above-described analysis value (R) changes beyond the threshold value (L) (outlet part threshold value (Le)) is detected as a precursor of a surge. In this way, a precursor of the surge can be accurately detected.

(6) In some embodiments, in the configuration of (5) described above,
the analysis value (R) includes at least one of a Lyapunov exponent, KS entropy, or a translation error amount obtained by the chaotic time series analysis, and
the detecting unit (4) is configured to
quantify the operation condition as a flow volume ratio (Qr) of an inflow of gas to the housing portion (82) to a surge occurrence flow rate (Qs) determined according to the operation condition, and
detect, as a precursor of the surge, a case where the Lyapunov exponent or the KS entropy increases beyond the outlet part threshold value (Le) as the flow volume ratio (Qr) decreases on a high-speed side of the number (N) of revolutions of the impeller (81), or a case where the Lyapunov exponent or the KS entropy changes beyond the outlet part threshold value (Le) as the flow volume ratio (Qr) decreases on a low-speed side of the number (N) of revolutions, or
detect, as a precursor of the surge, a case where the translation error amount increases beyond the outlet part threshold value (Le) as the flow volume ratio (Qr) decreases.

According to the configuration of (6) described above, a case where the amount of change in the Lyapunov exponent, the KS entropy, or the translation error amount increases beyond the outlet part threshold value (Le) as the flow volume ratio (Qr) of gas to the housing portion (82) to the surge occurrence flow rate (Qs) determined according to the operation condition is detected as a precursor of a surge. In this way, a precursor of the surge can be accurately detected.

(7) In some embodiments, in the configurations of (3) to (6) described above,
the inlet piping position (Pi) is a position in the inlet piping portion (83) separated upstream from a leading edge (LE) of the blade (81b) by not less than an inlet height of the impeller (81), and
the time series data (D) includes inlet time series data (Di) constituted by a detection value of an inlet sensor (9) installed in the inlet piping position (Pi).

According to the configuration of (7) described above, detection of a precursor of a surge is performed by using the time series data (D) obtained by a sensor (9) (inlet sensor (9)) installed in a position separated upstream from the leading edge (LE) of the blade (81b) of the impeller (81) by the inlet height of the impeller (81). In this way, a precursor of the surge can be detected without installing the sensor (9) in the vicinity of the blade (81b). In other words, an installation position (measurement position) of the sensor (9) installed in order to obtain the time series data (D) can be set to the inlet piping position (Pi) instead of the intermediate position (Pm) such as the vicinity of the blade (81b). Thus, a degree of freedom related to an installation position of the sensor (9) can be increased, and ease of measuring the above-described state quantity can be greatly improved.

(8) In some embodiments, in the configuration of (7) described above,
the detecting unit (4) is configured to detect, as a precursor of the surge, a case where an amount of change in the analysis value (R) obtained by an analysis of the inlet time series data (Di) by the analysis unit (3) changes beyond an inlet part threshold value (Li) determined according to a type of the analysis value (R) as the operation condition changes.

According to the configuration of (8) described above, a threshold value (L) of the amount of change in the analysis value (R) due to a change in the operation condition is determined according to a type of the above-described analysis value (R), and a case where the amount of change in the above-described analysis value (R) changes beyond the threshold value (L) (inlet part threshold value (Li)) is detected as a precursor of a surge. In this way, a precursor of the surge can be accurately detected.

(9) In some embodiments, in the configuration of (8) described above,
the analysis value (R) includes at least one of a Lyapunov exponent, KS entropy, or a translation error amount obtained by the chaotic time series analysis, and
the detecting unit (4) is configured to
quantify the operation condition as a flow volume ratio of an inflow of gas to the housing portion (82) to a surge occurrence flow rate (Qs) determined according to the operation condition, and
detect, as a precursor of the surge, a case where the Lyapunov exponent or the KS entropy decreases beyond the inlet part threshold value (Li) as the flow volume ratio (Qr) decreases, or
detect, as a precursor of the surge, a case where the translation error amount decreases beyond the inlet part threshold value (Li) as the flow volume ratio (Qr) decreases on a high-speed side of the number (N) of revolutions of the impeller (81), or a case where the translation error amount increases beyond the inlet part threshold value (Li) as the flow volume ratio (Qr) decreases on a low-speed side of the number (N) of revolutions.

According to the configuration of (9) described above, a case where the amount of change in the analysis value (R) decreases or increases beyond the inlet part threshold value (Li) as the flow volume ratio (Qr) of gas to the housing portion (82) to the surge occurrence flow rate (Qs) determined according to the operation condition is detected as a precursor of a surge. In this way, a precursor of the surge can be accurately detected.

(10) In some embodiments, in the configurations of (3) to (9) described above,
the intermediate position (Pm) is a position between the outlet piping position (Pe) and the inlet piping position (Pi), and
the time series data (D) includes near-blade time series data (Dm) constituted by a detection value of a near-blade sensor (9) installed in the intermediate position (Pm).

According to the configuration of (10) described above, a precursor of a surge is detected by using the time series data (D) obtained by a sensor (9) (near-blade sensor (9)) installed between the outlet piping position (Pe) and the inlet piping position (Pi) described above. In this way, a precursor of the surge can be appropriately detected.

(11) In some embodiments, in the configuration of (10) described above,
the detecting unit (4) is configured to detect, as a precursor of the surge, a case where an amount of change in the analysis value (R) obtained by an analysis of the near-blade time series data (Dm) by the analysis unit (3) changes beyond a vicinity part threshold value (Lm) determined according to a type of the analysis value (R) as the operation condition changes.

According to the configuration of (11) described above, a threshold value (L) of the amount of change in the analysis value (R) due to a change in the operation condition is determined according to a type of the above-described analysis value (R), and a case where the amount of change in the above-described analysis value (R) changes beyond the threshold value (L) (vicinity part threshold value (Lm)) is detected as a precursor of a surge. In this way, a precursor of the surge can be accurately detected.

(12) In some embodiments, in the configuration of (11) described above,
the analysis value (R) includes at least one of a Lyapunov exponent, KS entropy, or a translation error amount obtained by the chaotic time series analysis, and
the detecting unit (4) is configured to
quantify the operation condition as a flow volume ratio (Qr) of an inflow of gas to the housing portion (82) to a surge occurrence flow rate (Qs) determined according to the operation condition, and
detect, as a precursor of the surge, a case where the Lyapunov exponent, the KS entropy, or the translation error amount increases beyond the vicinity part threshold value (Lm) as the flow volume ratio (Qr) decreases on a low-speed side of the number (N) of revolutions.

According to the configuration of (12) described above, a case where the amount of change in the Lyapunov exponent, the KS entropy, or the translation error amount increases beyond the vicinity part threshold value (Lm) as the flow volume ratio (Qr) of gas to the housing portion (82) to the surge occurrence flow rate (Qs) determined according to the operation condition is detected as a precursor of a surge. In this way, a precursor of the surge can be accurately detected.

(13) In some embodiments, in the configurations of (1) to (12) above,
the time series data (D) includes at least two of outlet time series data (De) constituted by a detection value of an outlet sensor (9) installed in the outlet piping position (Pe), inlet time series data (Di) constituted by a detection value of an inlet sensor (9) installed in the inlet piping position (Pi), and near-blade time series data (Dm) constituted by a detection value of a near-blade sensor (9) installed in the intermediate position (Pm), and
the detecting unit (4) is configured to detect a precursor of the surge, based on a plurality of the analysis values (R) obtained by the chaotic time series analysis of each of a plurality of pieces of the time series data (D).

According to the configuration of (13) described above, the chaotic time series analysis is performed on at least two types of the time series data (D) obtained at the same time from each of the outlet piping position (Pe), the inlet piping position (Pi), and the intermediate position (Pm), and a precursor of a surge is detected based on the plurality of analysis values (R) obtained by the chaotic time series analysis. In this way, reliability of the detection of a precursor of the surge can be increased.

(14) In some embodiments, in the configuration of (13) described above,
the detecting unit (4) is configured to determine whether, when detecting a precursor of the surge, the precursor of the surge that is detected is a precursor or an occurrence of a pre-surge, based on the plurality of analysis values (R).

According to the configuration of (14) described above, the chaotic time series analysis is performed on at least two types of the time series data (D) obtained at the same time from each of the outlet piping position (Pe), the inlet piping position (Pi), and the intermediate position (Pm), and whether a detected precursor of a surge is a precursor or an occurrence of a pre-surge is determined based on the plurality of analysis values (R) obtained by the chaotic time series analysis. In this way, a precursor or an occurrence of the pre-surge can be detected.

(15) In some embodiments, in the configurations of (1) to (14) described above,
the surging precursor detecting device further includes a suppression unit (5) configured to perform suppression control for preventing an occurrence of the surge in a case where a precursor of the surge is detected.

According to the configuration of (15) described above, when a precursor of a surge is detected, an operation of avoiding an occurrence of the surge is performed by increasing a discharge force of the compressor (8) or increasing a passing flow rate such that the surge does not occur. In this way, an occurrence of the surge can be avoided.

(16) A surging precursor detecting method according to at least an embodiment of the present invention is a surging precursor detecting method of detecting a precursor of a surge of a compressor (8) including a housing portion (82) housing a blade (81b) including a rotary blade (81b) of an impeller (81) and configured to compress a fluid supplied from an inlet piping portion (83) and discharge the fluid to an outlet piping portion (84), and the surging precursor detecting method includes the steps of:
acquiring time series data (D) of a state quantity having a correlation with internal pressure in at least one position of an inlet piping position (Pi) in the inlet piping portion (83), an outlet piping position (Pe) in the outlet piping portion (84), and an intermediate position (Pm) between the inlet piping position (Pi) and the outlet piping position (Pe);
performing a chaotic time series analysis on the time series data (D) with the number of embedded dimensions being not less than three; and
detecting a precursor of the surge, based on an analysis value (R) obtained by the chaotic time series analysis.

According to the configuration of (16) described above, effects similar to those of (1) described above are achieved.

(17) A program according to at least an embodiment of the present invention is a program for detecting a precursor of a surge of a compressor (8) including a housing portion (82) housing a blade (81b) including a rotary blade (81b) of an impeller (81) and configured to compress a fluid supplied from an inlet piping portion (83) and discharge the fluid to an outlet piping portion (84), and the program causes a computer to achieve:
an acquisition unit (2) configured to acquire time series data (D) of a state quantity having a correlation with internal pressure in at least one position of an inlet piping position (Pi) in the inlet piping portion (83), an outlet piping position (Pe) in the outlet piping portion (84), and an intermediate position (Pm) between the inlet piping position (Pi) and the outlet piping position (Pe);
an analysis unit (3) configured to perform a chaotic time series analysis on the time series data (D) with the number of embedded dimensions being not less than three; and
a detecting unit (4) configured to detect a precursor of the surge, based on an analysis value (R) obtained by the chaotic time series analysis.

According to the configuration of (17) described above, effects similar to those of (1) described above are achieved.

### Reference Signs List

- 1: Surging precursor detecting device
- 10: Surging precursor detecting program
- 11: Processor
- 12: Storage device
- 2: Acquisition unit
- 3: Analysis unit
- 4: Detecting unit
- 5: Suppression unit
- 6: Alarm device
- 8: Compressor
- 81: Impeller
- 81b: Blade (rotor blade or stator vane)
- 82: Housing portion
- 83: Inlet piping portion
- 84: Outlet piping portion
- 86: Rotor shaft
- 8v: Blow-off valve
- LE: Leading edge
- TE: Trailing edge
- 9: Sensor
- 92: Flow rate sensor
- 93: Pressure ratio sensor
- 94: Rotational speed sensor
- x: sensor value
- D: Time series data
- De: Outlet time series data
- Di: Inlet time series data
- Dm: Near-blade time series data
- Pe: Outlet piping position
- Pi: Inlet piping position
- Pm: Intermediate position
- Pd: Diffuser outlet
- Pt: Scroll flap portion
- R: Analysis value (chaotic time series analysis)
- P: Pressure ratio
- Q: Actual flow rate
- Qs: Surge occurrence flow rate
- Qr: Flow volume ratio
- N: Number of revolutions
- B: Threshold value information
- L: Threshold value
- Le: Outlet part threshold value
- Li: Inlet part threshold value
- Lm: Vicinity part threshold value
- Fp: Pre-surge region
- Fs: Surge region
- M: Compressor map

## Claims

1. A surging precursor detecting device configured to detect a precursor of a surge of a compressor including a housing portion housing a blade including a rotary blade of an impeller and configured to compress a fluid supplied from an inlet piping portion and discharge the fluid to an outlet piping portion, the surging precursor detecting device comprising:
an acquisition unit configured to acquire time series data of a state quantity having a correlation with internal pressure in at least one position of an inlet piping position in the inlet piping portion, an outlet piping position in the outlet piping portion, and an intermediate position between the inlet piping position and the outlet piping position;
an analysis unit configured to perform a chaotic time series analysis on the time series data with the number of embedded dimensions being not less than three; and
a detecting unit configured to detect a precursor of the surge, based on an analysis value obtained by the chaotic time series analysis.

2. The surging precursor detecting device according to claim 1, wherein the detecting unit is configured to detect a precursor of the surge, based on the analysis value and the number of revolutions of the impeller.

3. The surging precursor detecting device according to claim 1 or 2, wherein
the detecting unit is configured to detect a precursor of the surge, based on an amount of change in the analysis value caused by a change in operation condition of the compressor.

4. The surging precursor detecting device according to claim 3, wherein
the outlet piping position is a position in the outlet piping portion separated downstream from a trailing edge of the blade by not less than an outlet height of the impeller, and
the time series data includes outlet time series data constituted by a detection value of an outlet sensor installed in the outlet piping position.

5. The surging precursor detecting device according to claim 4, wherein
the detecting unit is configured to detect, as a precursor of the surge, a case where an amount of change in the analysis value obtained by an analysis of the outlet time series data by the analysis unit changes beyond an outlet part threshold value determined according to a type of the analysis value as the operation condition changes.

6. The surging precursor detecting device according to claim 5, wherein
the analysis value includes at least one of a Lyapunov exponent, KS entropy, or a translation error amount obtained by the chaotic time series analysis, and
the detecting unit is configured to
quantify the operation condition as a flow volume ratio of an inflow of gas to the housing portion to a surge occurrence flow rate determined according to the operation condition, and
detect, as a precursor of the surge, a case where the Lyapunov exponent or the KS entropy increases beyond the outlet part threshold value as the flow volume ratio decreases on a high-speed side of the number of revolutions of the impeller, or a case where the Lyapunov exponent or the KS entropy changes beyond the outlet part threshold value as the flow volume ratio decreases on a low-speed side of the number of revolutions, or
detect, as a precursor of the surge, a case where the translation error amount increases beyond the outlet part threshold value as the flow volume ratio decreases.

7. The surging precursor detecting device according to any one of claims 3 to 6, wherein
the inlet piping position is a position in the inlet piping portion separated upstream from a leading edge of the blade by not less than an inlet height of the impeller, and
the time series data includes inlet time series data constituted by a detection value of an inlet sensor installed in the inlet piping position.

8. The surging precursor detecting device according to claim 7, wherein
the detecting unit is configured to detect, as a precursor of the surge, a case where an amount of change in the analysis value obtained by an analysis of the inlet time series data by the analysis unit changes beyond an inlet part threshold value determined according to a type of the analysis value as the operation condition changes.

9. The surging precursor detecting device according to claim 8, wherein
the analysis value includes at least one of a Lyapunov exponent, KS entropy, or a translation error amount obtained by the chaotic time series analysis, and
the detecting unit is configured to
quantify the operation condition as a flow volume ratio of an inflow of gas to the housing portion to a surge occurrence flow rate determined according to the operation condition, and
detect, as a precursor of the surge, a case where the Lyapunov exponent or the KS entropy decreases beyond the inlet part threshold value as the flow volume ratio decreases, or
detect, as a precursor of the surge, a case where the translation error amount decreases beyond the inlet part threshold value as the flow volume ratio decreases on a high-speed side of the number of revolutions of the impeller, or a case where the translation error amount increases beyond the inlet part threshold value as the flow volume ratio decreases on a low-speed side of the number of revolutions.

10. The surging precursor detecting device according to any one of claims 3 to 9, wherein
the intermediate position is a position between the outlet piping position and the inlet piping position, and
the time series data includes near-blade time series data constituted by a detection value of a near-blade sensor installed in the intermediate position.

11. The surging precursor detecting device according to claim 10, wherein
the detecting unit is configured to detect, as a precursor of the surge, a case where an amount of change in the analysis value obtained by an analysis of the near-blade time series data by the analysis unit changes beyond a vicinity part threshold value determined according to a type of the analysis value as the operation condition changes.

12. The surging precursor detecting device according to claim 11, wherein
the analysis value includes at least one of a Lyapunov exponent, KS entropy, or a translation error amount obtained by the chaotic time series analysis, and
the detecting unit is configured to
quantify the operation condition as a flow volume ratio of an inflow of gas to the housing portion to a surge occurrence flow rate determined according to the operation condition, and
detect, as a precursor of the surge, a case where the Lyapunov exponent, the KS entropy, or the translation error amount increases beyond the vicinity part threshold value as the flow volume ratio decreases on a low-speed side of the number of revolutions.

13. The surging precursor detecting device according to any one of claims 1 to 12, wherein
the time series data includes at least two of outlet time series data constituted by a detection value of an outlet sensor installed in the outlet piping position, inlet time series data constituted by a detection value of an inlet sensor installed in the inlet piping position, and near-blade time series data constituted by a detection value of a near-blade sensor installed in the intermediate position, and
the detecting unit is configured to detect a precursor of the surge, based on a plurality of the analysis values obtained by the chaotic time series analysis of each of a plurality of pieces of the time series data.

14. The surging precursor detecting device according to claim 13, wherein
the detecting unit is configured to determine whether, when detecting a precursor of the surge, the precursor of the surge that is detected is a precursor or an occurrence of a pre-surge, based on the plurality of analysis values.

15. The surging precursor detecting device according to any one of claims 1 to 14, further comprising:
a suppression unit configured to perform suppression control for preventing an occurrence of the surge in a case where a precursor of the surge is detected.

16. A surging precursor detecting method of detecting a precursor of a surge of a compressor including a housing portion housing a blade including a rotary blade of an impeller and configured to compress a fluid supplied from an inlet piping portion and discharge the fluid to an outlet piping portion, the surging precursor detecting method comprising the steps of:
acquiring time series data of a state quantity having a correlation with internal pressure in at least one position of an inlet piping position in the inlet piping portion, an outlet piping position in the outlet piping portion, and an intermediate position between the inlet piping position and the outlet piping position;
performing a chaotic time series analysis on the time series data with the number of embedded dimensions being not less than three; and
detecting a precursor of the surge, based on an analysis value obtained by the chaotic time series analysis.

17. A program for detecting a precursor of a surge of a compressor including a housing portion housing a blade including a rotary blade of an impeller and configured to compress a fluid supplied from an inlet piping portion and discharge the fluid to an outlet piping portion, the program causing a computer to achieve:
an acquisition unit configured to acquire time series data of a state quantity having a correlation with internal pressure in at least one position of an inlet piping position in the inlet piping portion, an outlet piping position in the outlet piping portion, and an intermediate position between the inlet piping position and the outlet piping position;
an analysis unit configured to perform a chaotic time series analysis on the time series data with the number of embedded dimensions being not less than three; and
a detecting unit configured to detect a precursor of the surge, based on an analysis value obtained by the chaotic time series analysis.
